# EUROPEAN PATENT APPLICATION

(11) **EP 1 679 700 A2**
(43) Date of publication of application: **12.07.2006**
(21) Application number: 05110573.2
(22) Date of filing: 10.11.2005
(51) Int. Cl.: G11B 7/125, G11B 7/135

(54) **Optical pick-up apparatus and optical disk apparatus incorporating the optical pick-up apparatus**

(30) Priority: 28.12.2004 JP 2004381932; 05.09.2005 JP 2005256817
(71) Applicant: Toshiba Samsung Storage Technology Corporation, Kawasaki City, Kanagawa 212-0013 (JP)
(72) Inventor: Tanioka, Chikara, 212-0013, Kawasaki-City, Kanagawa (JP)
(74) Representative: Henkel, Feiler & Hänzel

(57) **Abstract**

An exemplary optical pick-up apparatus of the invention comprises a first light source for emitting a light beam of a first wavelength; a second light source for emitting a light beam of a second wavelength greater than the first wavelength; a third light source for emitting a light beam of a third wavelength longer than the second wavelength; a first dichroic element for transmitting the light beam of the first wavelength and reflecting the light beam of the second wavelength; a second dichroic element for reflecting the light beams of the first and second wavelengths and transmitting the light beam of the third wavelength; and an objective lens for transmitting light beams that have the first and second wavelengths that have entered and exited the first and second dichroic elements and the third wavelength that have transmitted the second wavelength, and for projecting the light beams onto a disk.

## Description

### CROSS-REFERENCE TO RELATED APPLICATIONS

This application is based upon and claims the benefits of priority from the Japanese Patent Application 2004-381932, filed December 28, 2004, and Japanese Patent Application 2005-256817, filed September 5, 2005, the contents of both of which are hereby incorporated by reference in their entirety.

### BACKGROUND OF THE INVENTION

### 1. Field of the Invention

The present invention relates to an optical pick-up apparatus including an optical system simultaneously compatible with CDs, DVDs, HD-DVDs and an optical disk apparatus incorporating the optical pick-up apparatus.

### 2. Description of the Related Art

An optical pick-up device simultaneously compatible with HD-DVDs, DVDs, CDs is described, for example, in chapter 5, "Pick-up arrangement" written by Kiyono Ikenaka at page 29 of Non-Patent document 1 (Microoptics Study Group Journal Vol. 22 No. 3 p25-29 (issued September 2004)).

According to the optical pick-up arrangement described in this reference publication, a polarization beam splitter for splitting a light beam in a light transmission/reception system or a half mirror is disposed right after a DVD LD (Laser Diode) and the light beam from the polarization beam splitter or half mirror is combined with a light beam from an HD-DVD LD. Further, the light beam from the HD-DVD LD is never reflected and focused on an optical disk.

However, according to the optical pick-up arrangement described in the reference publication, the polarization beam splitter for splitting a light beam in said light transmission/reception system or the half mirror is provided and when the half mirror is employed, the efficiency of an optical system is reduced. In case of a polarization optical system employing a polarization beam splitter, light-combining means for combining a light beam with the light beam from the DVD LD increases the complexity in the specification of polarization and wavelength and therefore is considered to be virtually impossible to put into practice. Further, in the above-mentioned structure, the entire optical system is large in length and cannot be housed in a compact optical pick-up apparatus.

### [Non-Patent Document 1]

Microoptics Study Group Journal Vol. 22 No. 3 p25-29 (issued September 2004)

### BRIEF SUMMARY OF THE INVENTION

As described above, there is a problematic situation where the conventional optical pick-up apparatus simultaneously compatible with HD-DVDs, DVDs, CDs increases complexity in the specification of optical components and cannot be housed in a compact optical pick-up apparatus.

The present invention is made in consideration of problems in the above-described conventional optical pick-up apparatus simultaneously compatible with HD-DVDs, DVDs, CDs and an object of the invention is to provide an optical pick-up apparatus that never increases complexity in the specification of high-performance optical components and can be housed in a compact optical pick-up apparatus, and to provide an optical disk apparatus incorporating the optical pick-up apparatus.

According to one aspect of the invention, an optical pick-up apparatus is provided comprising: a first light source for emitting a light beam of a first wavelength; a second light source for emitting a light beam of a second wavelength greater than the first wavelength; a third light source for emitting a light beam of a third wavelength longer than the second wavelength; a first dichroic element for transmitting the light beam of the first wavelength and reflecting the light beam of the second wavelength; a second dichroic element for reflecting the light beams of the first and second wavelengths and transmitting the light beam of the third wavelength; and an objective lens for transmitting light beams that have the first and second wavelengths that have entered and exited the first and second dichroic elements and the third wavelength that have transmitted the second wavelength, and for projecting the light beams onto a disk.

According to an example of the invention, an optical pick-up apparatus can be provided which never increases complexity in the specification of high-performance optical components and can be housed in a sophisticated and compact optical pick-up apparatus, and further, an optical disk apparatus incorporating the optical pick-up apparatus can be provided.

### BRIEF DESCRIPTION OF THE DRAWINGS

FIG. 1 is a diagram showing an exemplary configuration of an embodiment of an optical pick-up apparatus according to the invention;
FIG. 2 is an explanatory diagram of how a light beam is incident on and reflected by a second dichroic element of the embodiment of the invention; and
FIG. 3 is an explanatory diagram of how a light beam is incident on and reflected by a first dichroic element of the embodiment of the invention.

### DETAILED DESCRIPTION OF THE INVENTION

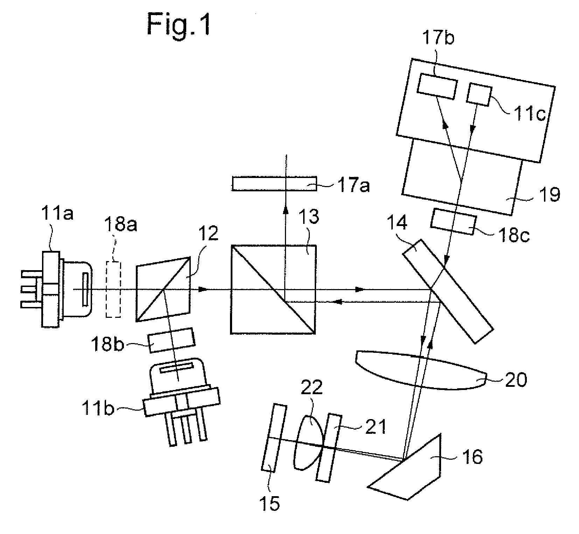

An embodiment of the invention will be explained below with reference to the accompanying drawings. FIG. 1 is an exemplary configuration of an embodiment of an optical pick-up apparatus according to the invention. An optical disk apparatus is provided with the optical pick-up apparatus for focusing laser beams originating from laser diodes 11a, 11b, 11c on a surface of an optical disk 15 as a recording medium in order to record and reproduce information. The optical pick-up apparatus comprises laser diodes 11a, 11b, 11c as a light source, which emit light beams of three different wavelengths, a first dichroic element 12, such as a dichroic prism, including a dichroic thin film for transmitting a light beam emitted from the laser diode 11a and reflecting a light beam emitted from the laser diode 11b, a polarization beam splitter 13 for transmitting a light beam exiting the first dichroic element 12, and a second dichroic element 14, such as a dichroic mirror, including a dichroic thin film for reflecting a light beam passing through the polarization beam splitter 13 and transmitting a light beam emitted from the laser diode 11c. A dichroic thin-film dielectric stack is used as the dichroic thin film.

The optical pick-up apparatus further comprises a launching mirror 16 for reflecting light beams reflected by and passing through the second dichroic element 14 to the disk 15 and reflecting again a light beam reflected from the disk 15 to the second dichroic element 14, and a first optical detector 17a for receiving a light beam reflected by the polarization beam splitter 13 after the light beam from the disk 15 is reflected by the launching mirror 16, reaches the second dichroic element 14 and is reflected by the second dichroic element 14. The optical pick-up apparatus further comprises: a combination lens 18b interposed between the laser diode 11b and the first dichroic element 12; light splitting means 19 consisting of, for example, a hologram, and a combination lens 18c interposed between the laser diode 11c and the second dichroic element 14; a collimator lens 20 interposed between the second dichroic element 14 and the launching mirror 16; and an optical member 21 and an objective lens 22 interposed between the launching mirror 16 and the disk 15, in which the optical member 21 includes a polarizing element, such as quarter-wave plate or polarization hologram, and a wavelength-selective and numerical aperture limiting element.

In an optical pick-up apparatus capable of detecting light beams of three wavelengths used for HD-DVD/DVD/CD read/write operations, i. e., simultaneously compatible with HD-DVDs, DVDs, CDs, light beams emitted from three laser diodes 11a, 11b, 11c need to be guided to one objective lens 22. In this case, it is required to keep the amount of wavefront aberration purposely low and the utilization ratio of light beam purposely high. Further, in slim-type optical pick-up, it is required to reduce the size of an entire optical system as much as possible. In this embodiment of the invention, these requirements are met as follows. This embodiment will be explained with reference to FIG. 1 showing the configuration of the slim-type optical pick-up.

The laser diode 11a as a first light source emits a light beam having a wavelength range of 405 nm for the HD-DVD. The light beam emitted from the laser diode transmits the first dichroic element 12 and the polarization beam splitter 13.

In general, when optical components of glass are employed, the amount of wavefront aberration in case of a light beam transmitting a glass optical component is reduced as compared to that in case of a the light beam reflected from the glass optical component and therefore the optical system allowing a light beam to transmit the first dichroic element 12 and the polarization beam splitter 13 is used for an HD-DVD optical system that is chosen out of the three optical systems (i. e., HD-DVD, DVD, CD optical systems) of interest in terms of requirement to keep the wavefront aberration low.

The light beam after transmitting the polarization beam splitter 13 is then reflected by the second dichroic element 14. In order to house the entire optical system in the slim-type optical pick-up, the HD-DVD optical system having an optical magnification factor of greater than that of a Compact Disk (CD) optical system uses reflection by the second dichroic element 14.

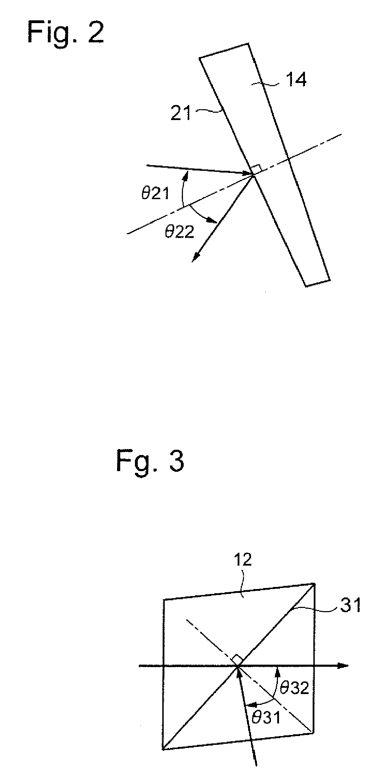

As shown in FIG. 2, the second dichroic element 14 is wedge-shaped and an incident angle θ 21 of the light beam relative to the normal to a reflecting surface 21 is preferably set to not greater than 40 degrees in terms of minimizing the chance of introduction of high order aberration at the location of the CD optical system and in consideration of the refraction properties of a dichroic film. Accordingly, in this case, an outgoing angle θ 22 of the light beam relative to the normal to the reflecting surface is also set to not greater than 40 degrees.

In this manner, effects of the introduction of high order aberration at the location of the CD optical system can be suppressed and the light beam of a first wavelength can be reflected with a high reflection coefficient by the second dichroic element 14. The light beam reflected by the second dichroic element 14 then transmits the collimator lens 20 and is reflected by the launching mirror 16. The linearly polarized light beam reflected by the launching mirror 16 is converted to a circularly polarized light beam by the quarter-wave plate of the optical member 21 and the circularly polarized light beam transmits the objective lens 22, whose numerical aperture is suitably controlled by the wavelength-selective and numerical aperture limiting element so as to vary depending on wavelength, to the disk 15. Then, the light beam reflected from the disk 15 follows a forward path. That is, the light beam reflected from the disk transmits the objective lens 22 and the optical member 21, is reflected by the launching mirror 16, transmits the collimator lens 20, and is reflected by the second dichroic element 14 to the polarization beam splitter 13, which however, in turn reflects the light beam to the first optical detector 17a. The numerical aperture limiting element limits the numerical aperture of the object lens 22 in order to reduce the numerical aperture of the object lens 22 when the wavelength of the light beam becomes long.

Further, the laser diode 11b as a second light source emits a light beam having a wavelength range of 655 nm for the DVD. The light beam emitted from the diode passes through the combination lens 18b and is first reflected by the first dichroic element 12.

As shown in FIG. 3, the first dichroic element 12 is wedge-shaped and an incident angle θ 31 and a reflecting angle θ 32 of the light beam relative to the normal to the reflecting surface are preferably set to not greater than 40 degrees in terms of minimizing the chance of introduction of wave aberration at the time of transmission of the light beam emitted from the first light source and in consideration of the refraction properties of a dichroic film. In this manner, effects of the introduction of wave aberration at the time of transmission of the light beam of the first wavelength can be suppressed and further the light beam of the second wavelength can be reflected with a high reflection coefficient.

Then, the light beam reflected by the first dichroic element 12 travels along substantially the same path as the light beam emitted by the above-mentioned HD-DVD laser diode 11a. That is, the light beam reflected by the first dichroic element transmits the polarization beam splitter 13, is reflected by the second dichroic element 14, transmits the collimator lens 20, is reflected by the launching mirror 16, passes through the optical member 21 and the objective lens 22, and is irradiated onto the disk 15. The light beam reflected from the disk 15 again passes through the objective lens 22, the optical member 21, is reflected by the launching mirror 16, transmits the collimator lens 20, is reflected by the second dichroic element 14, is reflected by the polarization beam splitter 13, and enters the first optical detector 17a.

The first optical detector 17a is for detecting an optical signal reflected from the disk and used to produce a RF signal, focusing signal, tracking signal, etc., when the disk 15 is accessed to record data and played to reproduce an original signal, and is commonly used in detecting optical signals from the disk that receives light beams from HD-DVD and DVD laser diodes.

Further, the quarter-wave plate as a light polarizing element of the optical member 21 could be replaced by a polarizing hologram having an operating wavelength range including the first and second wavelengths.

The laser diode 11c as a third light source, the second optical detector 17b, and the light splitting means 19 are integrated into a combined light splitting means and laser unit. The laser diode 11c emits a light beam having a wavelength range of 785 nm for the CD. The light beam passes through the light splitting means 19 for splitting a light beam to direct a portion of the energy of this light beam to the second optical detector 17b when the light beam reflected from the disk 15 transmit it and passes through the combination lens 18c, and then, transmits the second dichroic element 14.

The light beam transmitting the second dichroic element 14 passes through the collimator lens 20 and strikes the launching mirror 16, and passes through the optical member 21, the objective lens 22 to the disk 15 that, in this example, is a compact disk. The light beam reflected from the disk 15 follows a forward path. That is, since for example, the combined light splitting means and laser unit is used as shown in FIG. 1, the reflected light beam is diffracted in this unit and enters the second optical detector 17b disposed near the laser diode 11c. The second optical detector 17b detects an optical signal reflected from the disk 15 and used to produce a RF signal, focusing signal, tracking signal, etc., when the disk 15 that receives a light beam from a CD diode is accessed to record data and played to reproduce an original signal.

Remind that as described in connection with the explanation of the optical path of the light beam from the first light source, the linearly polarized light beam is converted to the circularly polarized light beam by the quarter-wave plate that is a light polarizing element of the optical member 21 and the circularly polarized light beam transmits the objective lens 22, whose numerical aperture is suitably controlled by the wavelength-selective numerical aperture limiting element so as to vary depending on wavelength, to the disk 15. Therefore, it is needless to say that an optical path along which the light beams from the second light source and the third light source travel to the disk is the same as that for the light beam from the first light source. The light polarizing element such as quarter-wave plate polarizes each light beam of the first, second and third wavelengths.

In this embodiment, since the combination lens 18b is interposed between the laser diode 11b and the first dichroic element 12, the magnification factor of an optical system capable of transmitting a light beam of a second wavelength in a forward direction can be different than that of an optical system capable of transmitting a light beam of a first wavelength in a forward direction. Further, since the combination lens 18c is interposed between the laser diode 11c and the second dichroic element 14, the magnification factor of a light optical system capable of transmitting a light beam of a third wavelength in a forward direction can be changed. Moreover, it could be contemplated that a combination lens 18a is also interposed between the laser diode 11a and the first dichroic element 12. In this case, similarly to the case where the combination lens 18b is interposed between the laser diode 11b and the first dichroic element 12, the magnification factor of an optical system capable of transmitting a light beam of a first wavelength in a forward direction can be different than that of an optical system capable of transmitting a light beam of a second wavelength in a forward direction.

According to the aforementioned embodiment of the invention, an enhanced, compact optical pick-up apparatus capable of generating, from a laser beam emitted from a laser diode, a beam spot used for recording information to and reproducing information from a recording medium and capable of detecting light beams of three wavelengths used for HD-DVD/DVD/CD read/write operations, and an optical disk apparatus equipped with the optical pick-up apparatus can be provided.

More specifically, when light beams emitted from three laser diodes 11a, 11b, 11c are guided to one objective lens 22, it is crucial to keep the amount of wavefront aberration purposely low and the utilization ratio of light energy purposely high. Accordingly, in the above embodiment, an HD-DVD optical system consists of an optical system allowing a light beam to transmit the first dichroic element 12 and the polarizing beam splitter 13 and therefore the wavefront aberration becomes small and the utilization ratio of light energy purposely can be kept high.

Further, in a slim-type optical pick-up, the entire optical system is required to be small in size in order to allow the pick-up to house the optical system. According to the above embodiment, reflecting a light beam by the second dichroic element 14 is used in the HD-DVD optical system having a large optical magnification factor. Therefore the entire optical system can be reduced in size as compared to an optical system of the compact disk (CD).

Moreover, according to the above embodiment, the first optical detector 17a for detecting an optical signal reflected from the disk 15 is commonly used to detect optical signals reflected from the disk that reflects laser beams from the HD-DVD laser source and the DVD laser source and therefore the number of optical detectors can be reduced to two. That is, only the above-described first optical detector 17a and the second optical detector 17b for detecting a light beam from the CD laser source are incorporated in the optical pick-up apparatus capable of detecting light beams of three wavelengths used for HD-DVD/DVD/CD read/write operations.

The above-described optical pick-up apparatus is applicable to an optical disk apparatus capable of generating, from a laser beam emitted from a laser diode, a beam spot used for recording information to and reproducing information from a recording medium.

## Claims

1. An optical pick-up apparatus comprising:
a first light source (11a) for emitting a light beam of a first wavelength;
a second light source (11b) for emitting a light beam of a second wavelength greater than the first wavelength;
a third light source (11c) for emitting a light beam of a third wavelength longer than the second wavelength;
a first dichroic element (12) for transmitting the light beam of the first wavelength and reflecting the light beam of the second wavelength;
a second dichroic element (14) for reflecting the light beams of the first and second wavelengths and transmitting the light beam of the third wavelength; and
an objective lens (22) for transmitting light beams that have the first and second wavelengths that have entered and exited the first and second dichroic elements (12,14) and the third wavelength that have ransmitted the second dichroic element (14), and for projecting the light beams onto a disk (15) .

2. The optical pick-up apparatus according to claim 1, further comprising a numerical aperture limiting element for limiting a numerical aperture of the objective lens (22) correspondent to the wavelengths of the light beam.

3. The optical pick-up apparatus according to claim 1 or 2, further comprising:
a polarizing beam splitter (13) interposed between the first dichroic element (12) and the second dichroic element (14);
a first optical detector (17a) for receiving a light beam reflected by the polarizing beam splitter (13); and
a light polarizing element (21) for polarizing each light beam of the first, second and third wavelengths.

4. The optical pick-up apparatus according to claim 3, wherein the polarizing element (21) is one of a polarization hologram and a quarter-wave plate.

5. The optical pick-up apparatus according to claim 3 or 4, further comprising:
light splitting means (19) for splitting the light beam of the third wavelength emitted from the third light source (11c) and reflected from the disk (15); and
a second optical detector (17b) for receiving the split light beam.

6. The optical pick-up apparatus according to any one of claims 1 to 5, further comprising a (first) combination lens (18a) interposed between the first light source (11a) and the first dichroic element (12).

7. The optical pick-up apparatus according to any one of claims 1 to 6, further comprising a (second) combination lens (18b) interposed between the second light source (11b) and the first dichroic element (12).

8. The optical pick-up apparatus according to any one of claims 1 to 7, further comprising a (third) combination lens (18c) interposed between the second dichroic element (14) and the third light source (11c).

9. The optical pick-up apparatus according to any one of claims 1 to 8, wherein the second dichroic element (14) is wedge-shaped.

10. The optical pick-up apparatus according to any one of claims 1 to 9, wherein the second dichroic element (14) is configured so that an incident angle of the light beams of the first and second wavelengths relative to the normal to a reflecting surface of the second dichroic element (14) is not greater than 40 degrees.

11. The optical pick-up apparatus according to any one of claims 1 to 10, wherein the first dichroic element (12) is configured so that an incident angle of the light beam of the second wavelength relative to the normal to a reflecting surface of the first dichroic element (12) is not greater than 40 degrees.

12. The optical pick-up apparatus according to claim 1, comprising:
a polarizing beam splitter (13) having an operating wavelength range including the first and second wavelengths;
a collimator lens (20) for transmitting a light beam reflected by the second dichroic element (14) and a light beam transmitting the second dichroic element (14), wherein said objective lens (22) is for transmitting light beams that have passed through the collimator lens (20) and that have the first, second and third wavelengths and for projecting the light beams onto the disk (15);
a light polarizing element (21) for polarizing each light beam of the first, second and third wavelengths, and a numerical aperture limiting element for limiting a numerical aperture of the objective lens (22) correspondent to the wavelengths of the light beam;
a first optical detector (17a) for receiving light beams that have the first and second wavelengths and that have been reflected by the first dichroic element (12) and the second dichroic element (14) after being reflected from the disk (15);
light splitting means (19) for splitting a light beam that has the third wavelength and that has transmitted the second dichroic element (14) after being reflected from the disk (15); and
a second optical detector (17b) for receiving a light beam split by the light splitting means (19).

13. The optical pick-up apparatus according to claim 12, wherein the third light source (11c), the light splitting means (19), and the second optical detector (17b) are integrated into one unit.

14. An optical disk apparatus comprising an optical pick-up apparatus, according to claim 5 or 12, for generating, from a laser beam emitted from a laser diode, a beam spot used for recording information to and reproducing information from a recording medium (15).
